# EUROPEAN PATENT SPECIFICATION

(11) **EP 2 442 196 B1**
(45) Date of publication and mention of the grant of the patent: **05.07.2023**
(21) Application number: 11185266.1
(22) Date of filing: 14.10.2011
(51) Int. Cl.: G05B 19/409, G05B 19/4061, B25J 9/16, G05B 19/406, G06F 3/01

(54) **TIME OF FLIGHT (TOF) HUMAN MACHINE INTERFACE (HMI)**
TOF-HMI
INTERFACE HOMME-MACHINE DE DURÉE DE VOL

(30) Priority: 14.10.2010 US 904471
(43) Date of publication of application: 18.04.2012
(73) Proprietor: Rockwell Automation Technologies, Inc., Mayfield Heights, OH 44124 (US); Rockwell Automation Switzerland GmbH, 5000 Aarau (CH)
(72) Inventor: Meinherz, Carl, 7208 Malans (CH); Brockman, Craig Martin, Windham, New Hampshire 03087 (US); Fooks, Elik I., Lexington, Massachusetts 02173 (US); Dr. Stein, Manfred Norbert, 7013 Graubuenden (CH); Hardegger, Martin, 7320 Sargans (CH); Chen, Wei Jie, Westford, Massachusetts 01886 (US); Berner, Reto, 5000 Aarau (CH); Galera, Richard, Nashua, New Hampshire 03062 (US); Black, Robert M., Bolton, Massachusetts 01740 (US); Merz, Roger, 8805 Richterswil (CH); Nair, Suresh, Amherst, New Hampshire 03031 (US); Eisenbrown, Steven A., South Russell, Ohio 44022 (US)
(74) Representative: Grünecker Patent- und Rechtsanwälte PartG mbB

(56) References cited:
- WO-A1-2009/155946
- DE-A1-102008 041 602
- DE-B4-102008 041 602
- US-A1- 2006 238 490
- US-A1- 2011 184 558
- Eva Kollorz ET AL: "Gesture recognition with a time-of-flight camera", International Journal of Intelligent Systems Technologies and Applications, Vol. 5, No. 3/4, 1 January 2008 (2008-01-01), pages 334-343, XP055004552, Retrieved from the Internet: URL:http://www5.informatik.uni-erlangen.de /Forschung/Publikationen/2008/Kollorz08-GR W.pdf [retrieved on 2011-08-11]
- SOUTSCHEK S ET AL: "3-D gesture-based scene navigation in medical imaging applications using Time-of-Flight cameras", COMPUTER VISION AND PATTERN RECOGNITION WORKSHOPS, 2008. CVPR WORKSHOPS 2008. IEEE COMPUTER SOCIETY CONFERENCE ON, IEEE, PISCATAWAY, NJ, USA, 23 June 2008 (2008-06-23), pages 1-6, XP031285718, ISBN: 978-1-4244-2339-2
- PIA BREUER ET AL: "Hand Gesture Recognition with a Novel IR Time-of-Flight Range Camera-A Pilot Study", 28 March 2007 (2007-03-28), COMPUTER VISION/COMPUTER GRAPHICS COLLABORATION TECHNIQUES; [LECTURE NOTES IN COMPUTER SCIENCE;;LNCS], SPRINGER BERLIN HEIDELBERG, BERLIN, HEIDELBERG, PAGE(S) 247 - 260, XP019078190, ISBN: 978-3-540-71456-9 * the whole document *

## Description

### TECHNICAL FIELD

The claimed subject matter relates generally to industrial control systems and more particularly to systems and methods that utilize time of flight sensing to control industrial equipment in the performance of work in industrial environments.

### BACKGROUND

To date, human-machine collaboration has been based on a master-slave relationship where the human user operates industrial machinery or programs industrial machinery while it is off-line, allowing only static tasks to be performed. Moreover, to ensure safety, the workspaces of humans and industrial equipment are typically separated in time or in space. As will be appreciated, the foregoing approach fails to take advantage of potential human and industrial equipment/machinery collaboration where each member, human and industrial equipment/machinery, can actively assume control and contribute to the solution of tasks based on their respective capabilities.

Sign language has been utilized extensively in society as well as amongst the hearing impaired for the purposes of communication. Moreover, sign language and/or body gestures/language have been employed in noisy environments and/or environments where distance is a factor to convey commands and/or directions. For example, at industrial worksites, such as an aircraft manufacturer, it is not atypical to see personnel using hand and/or arm signals to direct crane operators in the maneuvering of heavy components, such as wings for attachment to the body of an aircraft under manufacture. Further, certain sign language and/or body gestures/expressions, regardless of region of the world and/or culture, can have universality and can convey substantially similar connotations.

As will be appreciated industrial environments, or work areas within these industrial environments, can pose significant dangers and hazards to personnel who unwittingly enter them. In industrial environments there can be numerous machines that can spin and/or move at considerable speed and/or with tremendous force such that should a human come in the way of these machines serious injury or even death could result.

Touch screen monitors employed in industrial applications as human machine interfaces (HMIs), despite constant cleaning (e.g., with wet wipes) can over time become encrusted with grime and/or detritus (e.g., dust, oils from contact with fingers, oils from industrial processes, particulate from latex or rubber gloves, etc.) even under the most sterile and/or sanitary conditions. Build up of such grime and/or detritus layers can cause the sensitivity of touch screen monitors to deteriorate over time. Moreover, some touch screen monitors require that actual physical contact be made between a body part (e.g., finger) and the screen. For instance, there are touch screen monitors that do not function when one is wearing gloves. As can be imagined this can be a problem where the touch screen monitor is situated in a chemically corrosive industrial environment where exposure of skin in order to manipulate objects displayed on the screen can have hazardous consequences.

Further, touch screens manipulable using a stylus or other scribing means can also be subject to drawbacks since scribing or drawing the stylus over the surface of the touch screen can ultimately indelibly scratch or etch the surface making subsequent viewing of the screen difficult or problematic. Additionally, many working areas in an industrial plant can be situated within environments where the atmosphere is saturated with airborne abrasive particulate matter and/or oils that can settle on touch screens. This abrasive particulate matter, alone and/or in conjunction with any settled oils acting as a lubricant, can ineffaceably incise the touch screen were a stylus or other scribing means to be drawn over the touch screen. Moreover, use of light pens, light wands, or light guns, rather than a stylus, are typically not compatible with current industry trends away from cathode ray tube (CRT) monitors to utilization of flat screen technologies for reasons of space savings, and further use of light pens, light wands, or light guns requires the user be relatively proximate to the CRT monitor.

In order to demarcate or circumscribe and/or monitor hazardous regions in an industrial automation environment that can include various machines moving and/or rotating with great rapidity and/or force, it has been common practice to employ fences, light curtains, and the like, to immediately halt the machines in the controlled or bounded area should persons unwittingly stumble into and/or limbs accidentally enter such dangerous areas during operation of these machines. A further widespread practice that has also be employed to prevent inadvertent entry into restricted and/or supervised zones posing risk to life and/or limb in industrial automation environments has been through the use of position marking points wherein cameras detect and ascertain the position of the position marking points and generate the boundaries of the protected areas which can thereafter be monitored for intentional and/or inadvertent/accidental entry.
US 2011/184558 A1 relates to a robot and to a method for controlling a robot. The distance between an object and the robot and/or the derivative thereof or a first motion of the object is detected by means of a non-contact distance sensor arranged in or on a robot arm of the robot and/or on or in an end effector fastened on the robot arm. The robot arm is moved based on the first motion detected by means of the distance sensor, a target force or a target torque to be applied by the robot is determined based on the distance detected between the object and the robot, and/or a function of the robot or a parameterization of a function of the robot is triggered based on the first motion detected and/or a target distance between the object and the robot and/or the derivative thereof detected by means of the distance sensor.
WO 2009/155946 A1 relates to a safe robot system, comprising at least one robot, comprising at least one sensor means for the measurement of data of at least one person, which is within or near the working range of the at least one robot and comprising a processing system for the measured data. At least one person-related parameter is determined by the processing system and a predetermined trajectory of the at least one robot is adaptively influenced by the at least one person-related parameter.
US 2006/238490 A1 relates to a human-computer interface which includes a plurality of transducers comprising emitters and transducers arranged to detect patterns relating to movement of an object such as a gesture or a user's hand within a detection volume in the vicinity of the transducers, and to provide an input to computer equipment depending on the pattern detected. The interface may perform a simple analysis of the date received by the transducer to detect basic gestures, or it may perform a more complex analysis to detect a greater range of gestures, or more complex gestures. The transducers are preferably infra-red or ultrasonic transducers, although others may be suitable. The transducers may be arranged in a linear, a two-dimensional, or a three-dimensional pattern. Signals emitted by emitters may be modulated to aid gesture identification.

### SUMMARY

It is the object of the present invention to enable an improved control of industrial machinery in an industrial automation environment.

The object is solved by the subject matter of the independent claims which define the invention. Preferred embodiments of the invention are defined by the dependent claims.

The following summary presents a simplified overview to provide a basic understanding of certain aspects described herein. This summary is not an extensive overview nor is it intended to identify critical elements or delineate the scope of the aspects described herein. The sole purpose of this summary is to present some features in a simplified form as a prelude to a more detailed description presented later.

In accordance with various aspects and/or embodiments of the subject disclosure, a method for utilizing a user's body movement in an industrial automation environment is provided. The method includes employing a time-of-flight sensor to detect movement of a body part of the user, ascertaining whether or not the movement of the body part conforms to a recognized movement of the body part, interpreting the recognized movement of the body part as a performable action, and actuating industrial machinery to perform the performable action based on the recognized movement of the body part.

In accordance with further aspects or embodiments, a system that employs body movement to control industrial machinery in an industrial automation environment is disclosed. The system can include a time-of-flight sensor that detects movement of a body part of a user positioned proximate to the time-of-flight sensor, an industrial controller that establishes whether or not the movement of the body part conforms with a recognized movement of the body part, and an industrial machine that performs an action based at least in part on instructions received from the industrial controller.

In accordance with yet further aspects or embodiments, a system that utilizes movement performed by a user to actuate actions on industrial equipment is described. The system can include means for constantly monitoring the movement performed by the user, means for detecting an appropriate movement performed by the user, means for demarcating, on a generated or persisted map of an industrial factory environment, a safety zone around the industrial equipment described by the appropriate movement performed by the user, and means for actuating the industrial equipment to monitor the safety zone for inadvertent intrusion.

To the accomplishment of the foregoing and related ends, the following description and annexed drawings set forth in detail certain illustrative aspects. These aspects are indicative of but a few of the various ways in which the principles described herein may be employed. Other advantages and novel features may become apparent from the following detailed description when considered in conjunction with the drawings.

### BRIEF DESCRIPTION OF THE DRAWINGS

Fig. 1 is a schematic block diagram illustrating an industrial control system that utilizes a user's body movements to control industrial equipment or machinery in an industrial automation environment.
Fig. 2 is a further schematic block diagram depicting an industrial control system that utilizes body movement performed by a user located proximate to a time of flight sensor to actuate tasks on industrial equipment or industrial machinery.
Fig. 3 is another schematic block diagram illustrating an industrial control system that employs body movements performed by a user situated within a line of sight of a time-of-flight sensor to actuate tasks on industrial equipment or industrial machinery.
Fig. 4 is a flow diagram illustrating a process for employing body movements performed by a user situated within a line of sight of a time-of-flight sensor to control industrial machinery or equipment
Fig. 5 is a flow diagram illustrating another process for utilizing the gesticulations or movements performed by a user to actuate or effectuate actions on industrial equipment or machinery.
Fig. 6 is an example system that employs body movements performed by a user to control industrial machinery or equipment.
Fig. 7 is a further example system that utilizes the gesticulations or movements performed by a user to actuate or effectuate actions on industrial equipment or machinery.
Figs. 8-10 illustrate example time of flight sensor concepts.
Fig. 11 is a block diagram depicting a computer operable to execute the disclosed system.
Fig. 12 is a schematic block diagram of an illustrative computing environment for processing the disclosed architecture in accordance with another aspect.

### DETAILED DESCRIPTION

A system that employs a user's body movements, gestures, or gesticulations to control industrial equipment in industrial automation environments. In one embodiment, a method is provided that employs a time-of-flight sensor to detect movement of a body part of the user, ascertains whether or not the movement of the body part conforms to a recognized movement of the body part, interprets the recognized movement of the body part as a performable action, and thereafter actuates industrial machinery to perform the performable action. In a further embodiment, a system is provided that utilizes body movement to control industrial machinery in an industrial automation environment, wherein a time-of-flight sensor can be employed to detect movement of a body part of a user positioned proximate to the time-of-flight sensor, an industrial controller can be used to establish whether or not the movement of the body part conforms with a recognized movement (or pattern of movements) of the body part, and an industrial machine can perform actions in response to instructions received from the industrial controller.

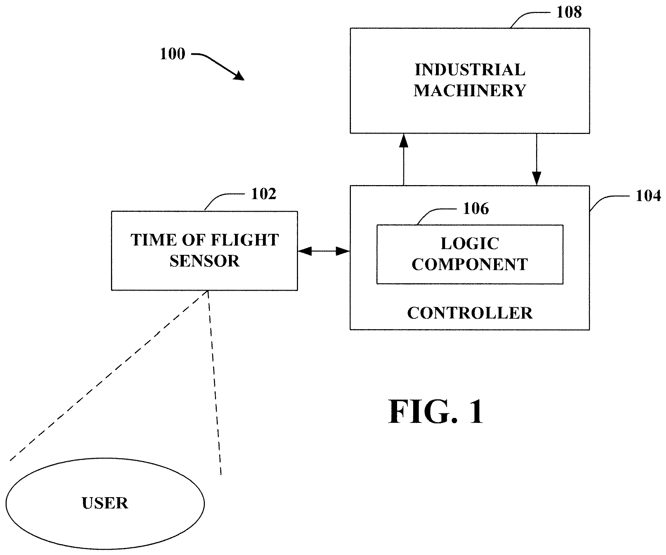

Referring initially to **Fig. 1****,** an industrial control system 100 that utilizes a user's body movements to control industrial equipment or machinery is illustrated. System 100 can comprise a time-of-flight sensor 102 that continuously and constantly monitors the movements of users standing or working within its line of sight (e.g., depicted as a dotted line projected towards a user). In one embodiment, the body movements that the time-of-flight sensor 102 is typically monitoring or detecting are those than can generally convey meaning were a human observer to perceive the body movement. For instance, in industrial automation environments of large scale or where, due to distance and/or overwhelming ambient noise, voice commands are futile, it is not uncommon for body movements (e.g., hand gestures, arm motion, or the like) to be employed to direct persons in control of industrial equipment to perform tasks, such as directing a fork lift operator to load a pallet of goods onto a storage shelf, or to inform an overhead gantry operator to raise or lower, move to the right or left, backward or forward, an oversized or heavy component portion (e.g., wing spar or engine) for attachment to the fuselage of an aircraft. These human hand, arm, body gestures, and/or finger gesticulations can have universal meaning to human observers, and/or if they are not immediately understood, they typically are sufficiently intuitive that they can easily be learned without a great investment in training, and moreover they can be repeated, by most, with a great deal of uniformity and/or precision.

In the same manner that a human observer can understand consistently repeatable body motion or movement to convey secondary meaning, system 100 can also utilize human body movement, body gestures, and/or finger gesticulations to have conveyed meaningful information in the form of commands, and can therefore perform subsequent actions based at least in part on the interpreted body movement and the underlying command. Thus, as stated earlier, time-of-flight sensor 102 can monitor body motion of a user positioned within its line of sight. Time-of-flight sensor 102 can monitor or detect any motion associated with the human body. In accordance with one embodiment, time-of-flight sensor 102 can monitor or detect motion associated with the torso of the user located proximate the time-of-flight sensor 102. In accordance with another embodiment, time-of-flight sensor 102 can detect or monitor motion associated with the hands and/or arms of the user situated within the time-of-flight sensor's 102 line of sight. In accordance with yet a further embodiment, time-of-flight sensor 102 can detect or monitor eye movements associated with the user situated within the working ambit of time-of-flight sensor 102. In accordance with another embodiment, time-of-flight sensor 102 can detect or monitor movement associated with the hand and/or digits (e.g., fingers) of the user positioned proximate to the optimal operating zone of time-of-flight sensor 102.

At this juncture, it should be noted, without limitation or loss of generality, that time-of-flight sensor 102, in conjunction or cooperation with other components (e.g., controller 104 and logic component 106) can perceive motion in at least three-dimensions. In accordance with an embodiment therefore, time-of-flight sensor 102 can perceive, not only, lateral body movement (e.g., movement in the x-y plane) taking place within its line of sight, but can also discern body movement in the z-axis as well.

Additionally, in cooperation with further components, such as controller 104 and/or associated logic component 106, time-of-flight sensor 102 can gauge the velocity with which a body movement, gesticulation, or gesture is performed. For example, where the user positioned proximate to the time-of-flight sensor 102 is moving their hands with great vigor or velocity, time-of-flight sensor 102, in conjunction with controller 104 and/or logic component 106, can comprehend the velocity and/or vigor with which the user is moving their hands to connote urgency or aggressiveness. Accordingly, in one embodiment, time-of-flight sensor 102 (in concert with other components) can perceive the vigor and/or velocity of the body movement providing a modifier to a previously perceived body motion. For instance, in an industrial automated environment, where a fork lift operator is receiving directions from a colleague, the colleague can have initially commenced his/her directions by gently waving his/her arm back and forth (indicating to the operator of the forklift that he/she is clear to move the forklift in reverse). The colleague on perceiving that the forklift operator is reversing too rapidly and/or that there is a possibility of a collision with on-coming traffic can either start waving his/her arm back and forth with great velocity (e.g., informing the forklift operator to hurry up) or hold up their arm with great emphasis (e.g., informing the forklift operator to come to an abrupt halt) in order to avoid the impending collision.

Conversely, in a further embodiment, time-of-flight sensor 102, in conjunction with controller 104 and/or logic component 106, can detect the sluggishness or cautiousness with which the user, situated proximate to the time-of-flight sensor 102, is moving their hands. Such sluggishness, cautiousness, or lack or emphasis can convey uncertainty, warning, or caution, and once again can act as a modifier to previously perceived body movements or future body movements. Thus, to continue the foregoing forklift operator example, the colleague can, after having waved his/her arm back and forth with great velocity, vigor, and/or emphasis can now commence moving his/her arm in a much more languid or tentative manner, indicating to the forklift operator that caution should be used to reverse the forklift.

On perceiving (e.g., detecting or monitoring) motion or movement associated with a user positioned within its line of sight, time-of-flight sensor 102 can communicate with controller 104. It should be appreciated without limitation or loss of generality that time-of-flight sensor 102, controller 104 (and associated logic component 106), and industrial machinery 108 can be located in disparate ends of an automated industrial environment. For instance, in accordance with an embodiment, time-of-flight sensor 102 and industrial machinery 108 can be situated in close proximity to one another, while controller 104 and associated logic component 106 can be located in an environmentally controlled (e.g., air-conditioned, dust free, etc.) environment. In accordance with a further embodiment, time-of-flight sensor 102, controller 104 and logic component 106 can be located in an environmentally controlled safe environment (e.g., a safety control room) while industrial machinery 108 can be positioned in a environmentally hazardous or inhospitable environment (e.g., industrial environments where airborne caustic or corrosive reagents are utilized). In still yet a further embodiment, time-of-flight sensor 102, controller 102, logic component 106, and industrial equipment or industrial machinery 108 can each be situated at geographically disparate ends of the industrial automation environment (e.g., for multinational corporations, disparate ends of the industrial automation environment can imply components of manufacture located in different cities and/or countries). Needless to say, in order to facilitate communication between the various and disparately located component parts of system 100, a network topology or network infrastructure will usually be utilized. Typically the network topology and/or network infrastructure can include any viable communication and/or broadcast technology, for example, wired and/or wireless modalities and/or technologies can be utilized to effectuate the subject application. Moreover, the network topology and/or network infrastructure can include utilization of Personal Area Networks (PANs), Local Area Networks (LANs), Campus Area Networks (CANs), Metropolitan Area Networks (MANs), extranets, intranets, the Internet, Wide Area Networks (WANs) - both centralized and/or distributed - and/or any combination, permutation, and/or aggregation thereof.

Time-of-flight sensor 102 can communicate to controller 104 a detected movement or motion or a perceived pattern of movements or motions that are being performed by the user located in proximity to time-of-flight sensor 102. In accordance with one embodiment, an individual movement, single motion, signal, or gesture (e.g., holding the palm of the hand up in a static manner) performed by the user can be detected by time-of-flight sensor 102 and conveyed to controller 104 for analysis. In accordance with a further embodiment, a single repetitive motion, signal, movement or gesture (e.g., moving the arm in a side to side motion) can be detected by time-of-flight sensor 102 and thereafter communicated to controller 104. In accordance with yet a further embodiment, a series or sequence of body motions/movements, signals, gestures, or gesticulations comprising a complex command structure, sequence, or set of commands (e.g., initially moving the arm in a side-to-side manner, subsequently utilizing an extended thumb providing indication to move up, and finally using the palm of the hand facing toward the time-of-flight sensor 102 providing indication to halt), for example, can be identified by time-of-flight sensor 102 and passed on to controller 104 for contemporaneous and/or subsequent interpretation, analysis and/or conversion into commands (or sequences or sets of commands) to be actuated or effectuated by industrial machinery 108.

As might have been observed and/or will be appreciated from the foregoing, the sequences and/or series of body/movements, signals, gestures, or gesticulations utilized by the subject application can be limitless, and as such a complex command structure or set of commands can be developed for use with industrial machinery 108. Moreover, one need only contemplate established human sign language (e.g. American Sign Language) to realize that a great deal of complex information can be conveyed merely through use of sign language. Accordingly, as will have been observed in connection with the foregoing, in particular contexts, certain gestures, movements, motions, etc. in a sequence or set of commands can act as modifiers to previous or prospective gestures, movements, motions, gesticulations, etc.

Thus, in order to distinguish valid body movement (or patterns of body movement) intended to convey meaning from invalid body movement (or patterns of body movement) not intended to communicate information, parse and/or interpret recognized and/or valid body movement (or patterns of body movement), and translate recognized and/or valid body movement (or patterns of body movement) into a command or sequence of commands or instructions necessary to actuate or effectuate industrial machinery to perform tasks, time-of-flight sensor can be coupled to controller 104 that, in concert with an associated logic component 106, can differentiate valid body movements (or patterns of body movement) from invalid body movements (or patterns of body movement), and can thereafter translate recognized body movement (or patterns of body movement) into a command or sequence or set of commands to activate industrial machinery 108 to perform the actions indicated by the recognized and valid body movements (or patterns of body movement).

To aid controller 104 and/or associated logic component 106 in differentiating valid body movement from invalid or unrecognized body movement, controller 104 and/or logic component 106 can consult a persisted library or dictionary of pre-established or recognized body movements (e.g., individual hand gestures, finger movement sequences, etc.) in order to ascertain or correlate the body movement supplied by, and received from, time-of-flight sensor 102 with recognized body movement, and thereafter to utilize the recognized body movement to interpret whether or not the recognized body movement is capable of one or more performable action on industrial machinery 108. Controller 104 and/or associated logic component 106 can thereafter supply a command or sequence of commands that can actuate performance of the action on industrial machinery 108.

It should be noted without limitation or loss of generality that the library or dictionary of pre-established or recognized body movements as well as translations or correlations of recognized body movement to commands or sequences of command can be persisted to memory or storage media. Thus, while the persistence devices (e.g., memory, storage media, and the like) are not depicted, typical examples of these devices include computer readable media including, but not limited to, an ASIC (application specific integrated circuit), CD (compact disc), DVD (digital video disk), read only memory (ROM), random access memory (RAM), programmable ROM (PROM), floppy disk, hard disk, EEPROM (electrically erasable programmable read only memory), memory stick, and the like.

Additionally, as will also be appreciated by those conversant in this field of endeavor, while body movements can be repeatable they nevertheless can be subject to slight variation over time and between different users. Thus, for instance a user might one day use his/her whole forearm and hand to indicate an instruction or command (e.g. reverse the forklift) but on the next the same user might use only his/her hand flexing at the wrist to indicate the same instruction or command. Accordingly, controller 104 and/or logic component 104 can also utilize fuzzy logic (or other artificial intelligence mechanisms) to discern slight variations or modifications in patterns of body movement between the same or different users of system 100, and/or to identify homologous body movements performed by the same or different users of system 100.

In connection with the aforementioned library or dictionary of established or recognized body movements, it should be appreciated that the established or recognized body movements are generally correlative to sets of industrial automation commands universally comprehended or understood by diverse and/or disparate industrial automation equipment in the industrial automation environment. The sets of commands therefore are typically unique to industrial automation environments and generally can include body movement to command correlations for commands to stop, start, slow down, speed up, etc. Additionally, the correlation of body movements to industrial automation commands can include utilization of established sign language (e.g., American Sign Language) wherein sign language gestures or finger movements can be employed to input alphanumeric symbols. Thus, in accordance with an aspect, letters (or characters) and/or numerals can be input by way of time of flight sensor 102 to correlate to applicable industrial automation commands.

The sets of commands and correlative body gestures and/or movements can be pre-established or installed during manufacture of time of flight sensor 102, and/or can be taught to time of flight sensor 102 during installation, configuration, and/or set up of time of flight sensor 102 in an industrial automation environment. In the case of teaching time of flight sensor 102 correlations or correspondences between gestures or signs and commands operable to cause industrial automation machinery to perform actions, this can be accomplished through use of a video input facility associated with time of flight sensor 102. In accordance with this aspect, time of flight sensor 102 can be placed in a learning mode wherein a user can perform gestures or finger movements which can be correlated with commands that cause industrial automation machinery or equipment to perform actions, and these correlations can subsequently be persisted to memory. As will be appreciated by those of moderate comprehension in this field of endeavor, selected body gestures and command correlations can be specific to particular types of industrial automation equipment, while other body gestures and command correlations can have wider or universal application to all industrial automation equipment. Thus, body gesture/command correlations specific or particular to certain types of industrial automation equipment or machinery can form a sub-set of the body gesture/command correlations pertinent and universal to all industrial automation equipment or machinery. Once time of flight sensor 102 has been configured (either through installation and persistence of pre-established sets of commands and body gesture correspondences or through the aforementioned learning mode) with sets of command and body gesture correlations, time of flight sensor 102 can be switched to a run time mode wherein the sets of body gesture/command correlations can be utilized to actuate industrial equipment or machinery.

In an additional embodiment, time of flight sensor 102, whilst in a run time mode or in a user training mode can be utilized to provide dynamic training wherein time of flight sensor 102 through an associated video output facility can demonstrate to a user the various body gesture/command correspondences persisted and utilizable on specific industrial machinery or equipment or universally applicable to industrial machinery situated in industrial automation environments in general. Further, time of flight sensor 102, where a user or operator of industrial machinery is unable to recall a body gesture/command correspondence or sequence of body gesture/command correspondences, once again through an associated video output functionality, can provide tutorial to refresh the operator or user's memory regarding the body gesture/command correspondence(s). Additionally during run time mode, time of flight sensor 102 can further provide a predictive feature wherein plausible or possible body gesture/command correspondences can be displayed through the video output feature associated with time of flight sensor 102. Thus, for instance where the user or operator has commenced, through body gestures, inputting commands to operate industrial automation equipment, time of flight sensor 102 can predictively display on a video screen possible alternative body gestures that can be undertaken by the user to further the task being performed by the industrial machinery.

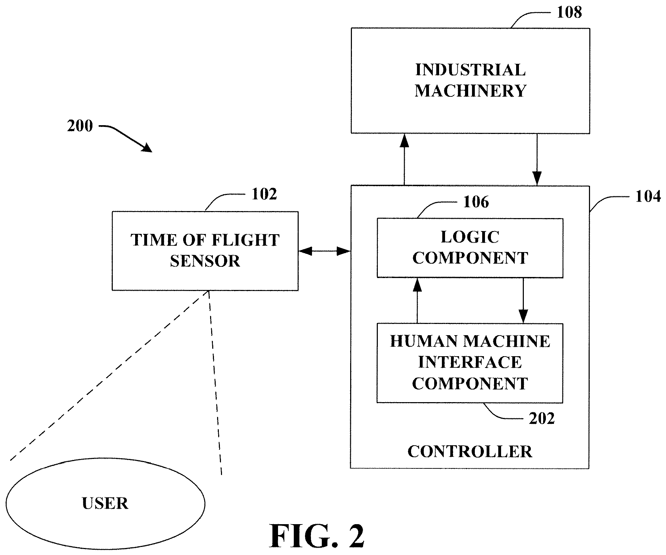

With reference to **Fig. 2****,** a further industrial control system 200 is depicted that utilizes body movement performed by a user located proximate to a time of flight sensor 102 to actuate tasks on industrial equipment or industrial machinery 108. In this embodiment, industrial control system 200, in addition to previously discussed, time-of-flight sensor 102, controller 104, and logic component 106 that control industrial machinery or equipment 108 that can be geographically dispersed, and/or centrally located within a single monolithic facility, can include a human machine interface component 202 that can be associated with controller 104.

Human machine interface component 202, in concert with time-of-flight sensor 102 (or a plurality of time-of-flight sensors disposed in various locations), can be utilized to provide a touchless touch screen interface wherein motions of the fingers and/or hands can be utilized to interact with industrial machinery 108. Such a touchless touch screen interface can be especially applicable in environments (e.g., food processing) where a user or operator of a touch screen interface comes in contact with oily contaminants (e.g., cooking oils/fats/greases) and yet needs to access the touch screen. As will be comprehended by those cognizant in this field of endeavor, touching touch sensitive devices with hands contaminated with oils and/or greases can diminish the visibility of displayed content associated with the screen and significantly attenuate the sensitivity of the touch sensitive device.

Further, a touchless touch screen interface can be utilized from a distance by an operator or user. For instance, the operator or user can be performing tasks at a distance (e.g., beyond reach) from the touch screen and through the facilities provided by human machine interface component 202 and time-of-flight sensor 102 the operator or user can interact with the touchless touch screen and thereby actuate work to be performed by industrial machinery 108. Such a facility can be especially useful where industrial machinery 108 is located in environmentally hazardous areas while the user can be controlling the industrial machinery 108, via the touchless touch screen provided by human machine interface component 202, from an environmentally controlled safe zone, for example.

As has been discussed above, time-of-flight sensor 102 can detect body movement, and in particular, can detect hand and/or finger movement to a resolution such that motion can be translated by controller 104 and associated logic component 106 into actions performed by industrial machinery 108. In one embodiment, human machine interface 202 can be utilized to present a touchless touch screen interface that can interpret physical input (e.g., hand and/or finger movement perceived by time-of-flight sensor 102) performed in multiple dimensions by a user or operator and translate these movements into instructions or commands that can be acted upon by industrial machinery 108.

In accordance with at least one embodiment, typical physical input that can be performed by the user can include utilization of pre-defined sets of hand signals that can be translated into instructions or commands (or sequences of instructions or commands) that can be employed to effectuate or actuate tasks on industrial machinery 108. Further, in accordance with further embodiments, physical input performed by the user or operator can include finger and/or hand movements in a single plane (e.g., in the x-y plane) such that horizontal, vertical, or diagonal movement can be detected and translated. For instance, keeping in mind that the operator or user is interacting touchlessly with a touchless touch display generated by human machine interface component 202, the operator or user can, without touching the display, in three-dimensional space, simulate a flicking motion in order to actuate a moving slide bar projected onto the touchless touch display by human machine interface component 202.

Further, still bearing in mind that the user or operator in interacting touchlessly with a touchless touch display projected by human machine interface component 202, can simulate touching a button generated by human machine interface component 202 and projected onto the touchless touch display. In accordance with this aspect, the user can simulate movement of a cursor/pointer onto a pre-defined location of the projected touchless touch screen (e.g., the user can cause movement of the cursor/pointer to the pre-defined location by moving his/her hand or finger in a first plane) and thereafter simulate pressing the button (e.g., the user can activate/deactivate the button by moving his/her hand or finger in a second plane). Further, the user or operator can simulate releasing and/or depressing the button multiple times (e.g., by repeatedly moving his/her hand/finger in the second plane) thereby simulating the effect of jogging. It should be noted without limitation or loss of generality, that while the foregoing illustration describes employment of a first and second plane, human machine interface component 202, in concert with time-of-flight component 102, controller 104 and associated logic component 106, can monitor and track movement by the user or operator in multiple planes or dimensions.

Additionally, in accordance with a further embodiment, human machine interface component 202 can recognize and translate movement (or the lack thereof) as corresponding to pressure (and degrees of pressure) exerted. Thus in continuation of the foregoing example, the user or operator may wish to continually to press the button. Accordingly, human machine interface component 202 can recognize that the user or operator has not only positioned his/her hand or finger over the button to simulate pressing the button, but has also continued to have left his/her hand or finger in the same position to signify that he/she wishes to continue pressing the button. Further, human machine interface component 202 can also detect degrees of pressure intended by the user or operator to be exerted on the button. For instance, the user or operator having continued to have left his/her hand in the same relative position over the button signifying application of constant pressure on the button, can move his/her hand or finger into or out of the second plane to indicate either an increase or diminution of pressure to be applied to the button. The amount of relative movement of the hand or finger into or out of the second plane can also be utilized to assess the magnitude with which the button is to be released or depressed thereby providing indication as to an increase or decrease in the degree of pressure intended to be applied by the user or operator. For example, where the user or operator moves, from a previously established static position, his/her hand or finger substantially into the second plane a greater amount of pressure on the button can be intended. Similarly, where the user or operator moves his/her hand or finger out of the second plane a lesser amount of pressure on the button can intended. Based at least in part on these hand or finger movements human machine interface component 202 can commensurately adjust the pressure on the button.

In accordance with yet a further embodiment, human machine interface component 202 can recognize and translate velocity of movement (or the lack thereof) as corresponding to an urgency or lack of urgency with which the button is pressed or released. Thus, for example, where the user or operator moves his/her hand or finger with great rapidity (or velocity) into or out of the second plane, this motion can signify pressing or releasing the button abruptly. For instance, where time-of-flight sensor 102, in conjunction with controller 104, logic component 106, and human machine interface component 202, ascertains that the user or operator moves his/her hand/finger with great velocity (e.g., measured as a rate of change of distance (d) over time (*t*) (Δ*d*/Δ*t*)), this can be translated as pressing the button with great pressure or releasing the button abruptly. It should be noted, that rapid movements of hands or fingers can also be translated to infer that the operator or user wishes that the actions be performed with greater speed or more swiftly, and conversely, slower movements can be interpreted as inferring the operator wants the actions to be performed at a slower or more measured pace.

In accordance with still a further embodiment, and has been discussed *supra,* time-of-flight sensor 102 can also interpret, comprehend, and translate common sign language or acceptable hand signals that can describe a pattern of instructions and/or commands that can be utilized by industrial machinery to perform tasks. For example, if human machine interface component 202 projects a simulacrum of a wheel associated with a piece of industrial equipment (e.g., industrial machinery 108) onto a touchless touch screen display, time-of-flight sensor 102 can detect or ascertain whether the operator or user's movements can be interpreted as motions indicative of rotating the wheel as well as the velocity at which the wheel should be spun. In yet a further example, human machine interface component 202 can project a simulacrum of a lever associated with a piece of industrial equipment onto the touchless touch screen display, in this instance, time-of-flight sensor 102 can ascertain whether or not the user's movements simulate moving the lever and/or the amount of force that should be utilized to manipulate the lever.

It should be noted, without limitation or loss of generality, in connection with the foregoing, that while human machine interface component 202 projects simulacrums of levers, buttons, wheels, console displays, etc. associated with various industrial machinery 108, and that users or operators of these various machines touchlessly interact (through the displays projected by human machine interface component 202 onto a projection surface) with the various simulacrums, the user's movements actuate work to be performed by physical industrial machinery 108 located in the industrial environment.

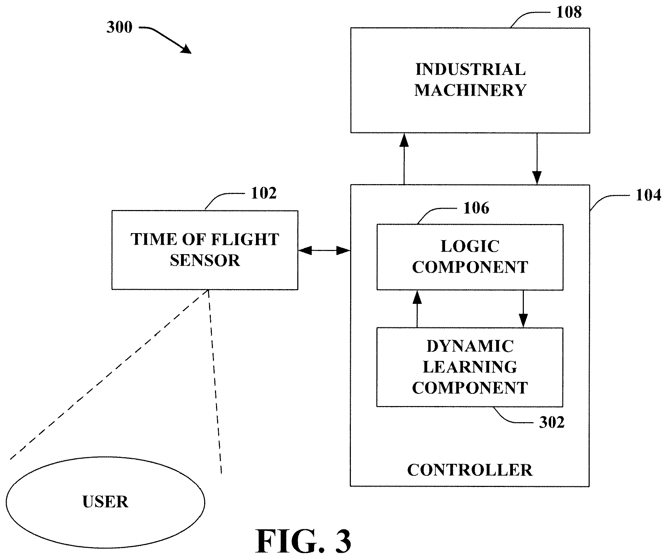

Turning now to **Fig. 3** wherein an industrial control system 300 that employs body movements (or a sequence of body gestures) performed by a user situated within a line of sight of a time-of-flight sensor 102 to actuate tasks on industrial equipment or industrial machinery 108 is illustrated. In this embodiment, industrial control system 300, in addition to previously discussed time-of-flight sensor 102, controller 104, logic component 106, and human machine interface component (not shown), that control geographically located and/or more proximally situated industrial machinery or equipment 108, can include a dynamic learning component 302.

Dynamic learning component 302 can be utilized to learn individual movements, sequences of movement, and variations of movements (since typically no two individuals can perform the same actions in precisely the same manner) performed by users and translate these user actions into commands or instructions performable by industrial machinery 108. Additionally, since the manner and movement of a user in performing the various actions or movements can vary over time, dynamic learning component 302 can dynamically and continually modify previously learned movement to reflect these changes without deleteriously changing the underlying significance, meaning, or translation of the movements into performable commands or instructions, or requiring the system to be re-trained or re-programmed every time that a slight variation in user movement is discovered or detected.

Dynamic learning component 302 can also be employed to perform tasks that for safety reasons do not lend themselves to dynamic adjustment. For example, dynamic learning component 302 can be utilized to demarcate safety boundaries around industrial equipment (e.g., industrial machinery 108). This can be accomplished by using time-of-flight sensor 102 and dynamic learning component 302 to monitor or track the movement of a user (e.g., a safety supervisor) as he/she walks around an area intended to mark the safety boundary around industrial machinery 108. In accordance with one embodiment, time-of-flight sensor 102 and dynamic learning component 302 can focus on the user and track and monitor the user as he/she perambulates around the industrial equipment thereby creating a safety boundary that can be vigilantly monitored by dynamic learning component 302 in concert with time-of-flight sensor 102, controller 104, and logic component 106. Thus, where there is accidental, perceived, or impending ingress by persons into the demarcated safety zone, a panoply of safety counter measures can be effectuated (e.g., the industrial machinery can be powered down, sirens can be actuated, gates around the industrial equipment can be closed or lowered, etc.), and in so doing injury or death can be averted.

In accordance with a further embodiment, time-of-flight sensor 102 and dynamic learning component 302, rather than particularly focusing on the user, can focus on a item or sensor (e.g., light emitter, ultra-sonic beacon, piece of clothing, etc.) being carried or worn by the user while the user circumscribes the periphery of the intended safety zone to provide a demarcation boundary. As in the foregoing example, time-of-flight sensor 102 and dynamic learning component 302 can track the item or sensor as the user moves around the intended boundary, generating and/or updating a persisted boundary map identifying safety zones around various industrial machinery 108 within the industrial facility, thereby creating safety boundaries that can be continually monitored by dynamic learning component 302 in concert with time-of-flight sensor 102, controller 104, and logic component 106, to prevent unintended entrance of persons within the circumscribed safety areas.

It should be noted that time-of-flight sensor 102 and dynamic learning component 302 can also effectuate demarking and/or monitoring of safety or warning zones that might have been previously, but temporarily, demarcated using tape integrated with light emitting diodes (LEDs), luminescent or fluorescing tape, triangulating beacons, and the like. Similarly, where safety or warning zones are of significant scale, time-of-flight sensor 102 and dynamic learning component 302 can also effectuate demarcation of warning or safety area where a moving machine (e.g., a robot) circumnavigates a path(s) to indicate danger zones.

It is noted that components associated with the industrial control systems 100, 200, and 300 can include various computer or network components such as servers, clients, controllers, industrial controllers, programmable logic controllers (PLCs), energy monitors, batch controllers or servers, distributed control systems (DCS), communications modules, mobile computers, wireless components, control components and so forth that are capable of interacting across a network. Similarly, the term controller or PLC as used herein can include functionality that can be shared across multiple components, systems, or networks. For example, one or more controllers can communicate and cooperate with various network devices across the network. This can include substantially any type of control, communications module, computer, I/O device, sensors, Human Machine Interface (HMI) that communicate *via* the network that includes control, automation, or public networks. The controller can also communicate to and control various other devices such as Input/Output modules including Analog, Digital, Programmed/Intelligent I/O modules, other programmable controllers, communications modules, sensors, output devices, and the like.

The network can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth. In addition, the network devices can include various possibilities (hardware or software components). These include components such as switches with virtual local area network (VLAN) capability, LANs, WANs, proxies, gateways, routers, firewalls, virtual private network (VPN) devices, servers, clients, computers, configuration tools, monitoring tools, or other devices.

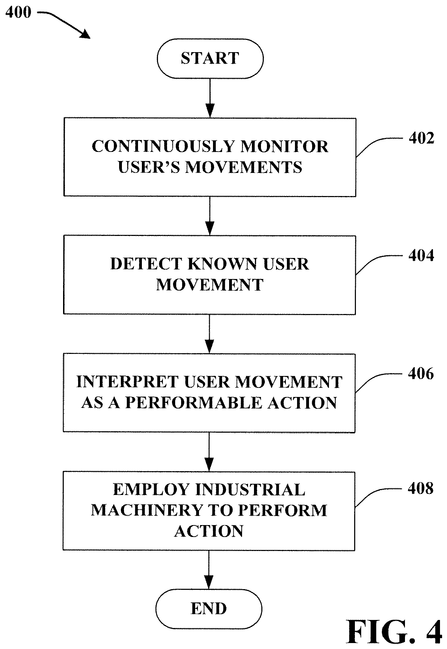

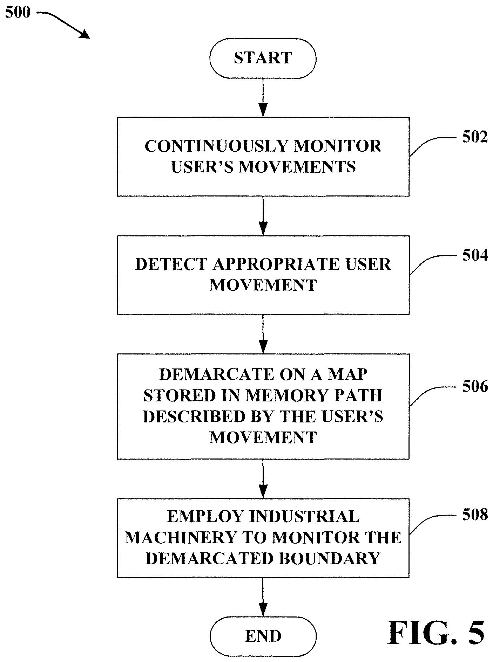

**Fig. 4** is a flow diagram 400 illustrating a process for employing body movements (or a sequence of body gestures) performed by a user situated within a line of sight of a time-of-flight sensor to control industrial machinery or equipment. **Fig. 5** which is described below represents a further methodology or process for utilizing the gesticulations or movements performed by a user while in proximity of a time-of-flight sensor to actuate or effectuate actions on industrial equipment or machinery. While, for purposes of simplicity of explanation, the methodologies are shown and described as a series of acts, it is to be understood and appreciated that the methodologies are not limited by the order of acts, as some acts may occur in different orders or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology as described herein.

The techniques and processes described herein may be implemented by various means. For example, these techniques may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (e.g., procedures, functions, and so on) that perform the functions described herein. The software codes may be stored in memory unit and executed by the processors.

**Fig. 4** is a flow diagram illustrating a process 400 for employing body movements (or a sequence of body gestures) performed by a user situated within a line of sight of a time-of-flight sensor to control industrial machinery or equipment. Process 400 can commence at 402 wherein the movements of a user located proximate to a time-of-flight sensor is continuously monitored. At 404 a known or recognized movement or motion associated with the user can be detected. At 406 the detected or recognized movement or motion associated with the user can be interpreted to ascertain whether or not the movement or motion is ascribable to an action (or performable action) capable of being undertaken by industrial machinery or industrial equipment under the control of the user. Where it is ascertained that the movement or motion is ascribable to a performable action, commands or instructions can be conveyed to the industrial machinery so that the industrial machinery can perform the action at 408.

**Fig. 5** is a flow diagram illustrating a process 500 for creating and defining a dynamically adjustable safety zone surrounding an industrial machine. Process 500 can commence at 502 where a time of flight sensor can continuously monitor a user's movements as he/she perambulates around the industrial machine in order to describe a path that can be employed to demarcate the safety zone around the industrial machine. At 504 the time of flight sensor can detect appropriate user movement (e.g., a movement that is recognized as conveying interpretable meaning). At 506 where appropriate user movement has been detected, these movements can be utilized to demarcate on a map persisted in memory the path described by the user's movement (e.g., his/her perambulation around the periphery boundary surrounding the industrial machine). At 508 industrial machinery (e.g., gates, klaxons, automatic barriers, and the like) in conjunction with a time-of-flight sensor can be utilized to monitor the established boundary for accidental or inadvertent ingress by users.

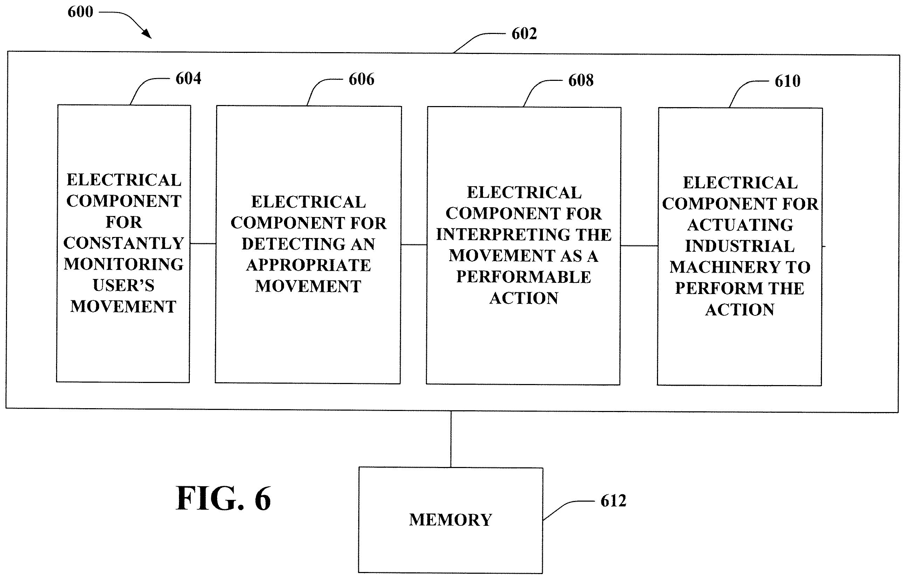

Turning to **Fig. 6****,** illustrated is a system 600 that includes functional blocks that can represent functions implemented by a processor, software, or combination thereof (e.g., firmware). System 600 includes a logical grouping 602 of electrical components that can act in conjunction. Logical grouping 602 can include an electrical component for constantly monitoring a user's movement 604. Further, logical grouping 602 can include an electrical component for detecting an appropriate movement performed by the user 606. Moreover, logical grouping 602 can include an electrical component for interpreting the movement as a performable action 608. Furthermore, logical grouping 602 can include an electrical component for actuating industrial machinery to perform the action 610. Additionally, system 600 can include a memory 612 that retains instructions for executing functions associated with electrical components 604, 606, 608, and 610. While shown as being external to memory 612, it is to be understood that electrical components 604, 606, 608, and 610 can exist within memory 612.

As will be appreciated by those of moderate comprehension in this field of endeavor, the logical grouping 602 of electrical components can in accordance with an embodiment be a means for performing various actions. Accordingly, logical grouping 602 of electrical components can comprise means for constantly monitoring a user's movement 604. Additionally, logical grouping 602 can further comprise means for detecting an appropriate movement performed by the user 606. Moreover, logical grouping 602 can also include means for interpreting the movement as a performable action 608. Furthermore, logical grouping 602 can additionally include means for actuating industrial machinery to perform the action 610.

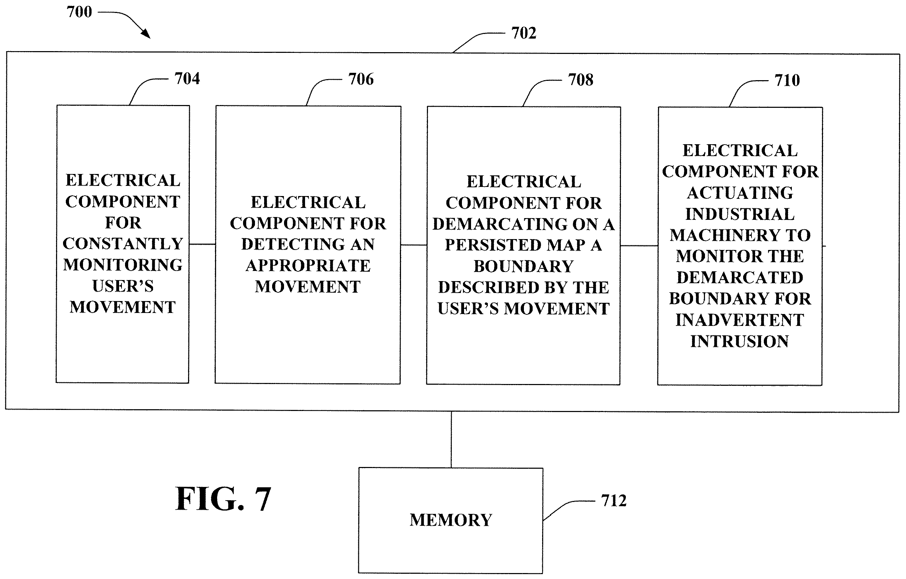

Turning to **Fig. 7****,** illustrated is a system 700 that includes functional blocks that can represent functions implemented by a processor, software, or combination thereof (e.g., firmware). System 700 includes a logical grouping 702 of electrical components that can act in conjunction. Logical grouping 702 can include an electrical component for constantly monitoring a user's movement 704. Further, logical grouping 702 can include an electrical component for detecting an appropriate movement performed by the user 706. Moreover, logical grouping 702 can include an electrical component for demarcating on a persisted map a boundary described by the user's movement 708. Furthermore, logical grouping 602 can include an electrical component for actuating or causing industrial machinery to monitor the demarcated boundary for accidental or inadvertent intrusion into the demarcated area 710. Additionally, system 700 can include a memory 712 that retains instructions for executing functions associated with electrical components 704, 706, 708, and 710. While shown as being external to memory 712, it is to be understood that electrical components 704, 706, 708, and 710 can exist within memory 712.

Once again as will be comprehended by those of reasonable skill, logical grouping 702 of electrical components that can, in accordance with various embodiments, act as a means for accomplishing various actions or tasks. Thus, logical grouping 702 can include means for constantly monitoring a user's movements 704. Further, logical grouping 702 can include means for detecting an appropriate movement performed by the user 706. Moreover, logical grouping 702 can include means for demarcating on a persisted map a boundary described by the user's movements 708. Furthermore, logical grouping 702 can include means for actuating or causing industrial machinery to monitor the demarcated boundary for accidental or inadvertent intrusion into the demarcated area 710.

The techniques and processes described herein may be implemented by various means. For example, these techniques may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (e.g., procedures, functions, and so on) that perform the functions described herein. The software codes may be stored in memory unit and executed by the processors.

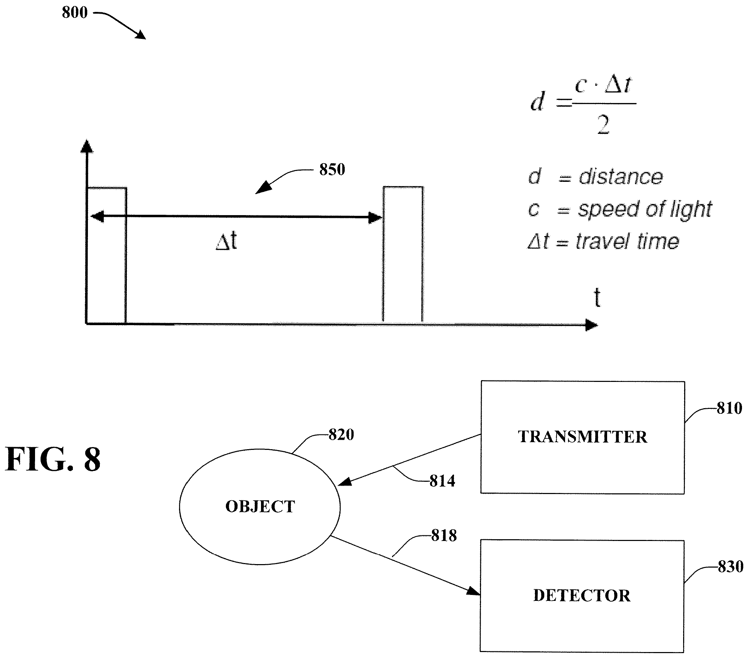

**Figs. 8-10** are discussed collectively and illustrate example time of flight sensor concepts. At 810 of **Fig. 8****,** a transmitter generates an infrared beam 814 that is reflected at 818 from an object 820, where the reflection is received at a detector 830. The time it takes for the transmitted wave 814 to be received at the detector 818 is shown at diagram 850 that represents delta t. In general, the object distance d can be detected from the equation d = (c * Δt)/2, where d equals the object distance, c equals the speed of light, and Δt equals the light travel time from transmitter 810 to detector 820. It is to be appreciated that other types of TOF measurements are possible as will be described in more detail below.

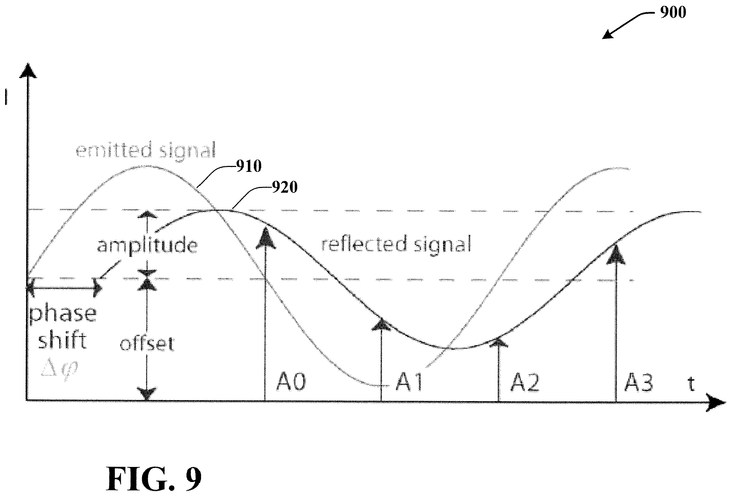

Proceeding to **Fig. 9****,** a diagram 900 illustrates a phase shift between an emitted or transmitted signal and a received or reflected signal 920. In general, parameters of phase shift shown as A0, A1, A2, and A3 are employed to compute distance of the respective object shown at 820 of Fig. 8. In general, object distance is basically proportional to the detected phase shift, basically independent of background illumination, and basically independent of reflective characteristics of the objects.

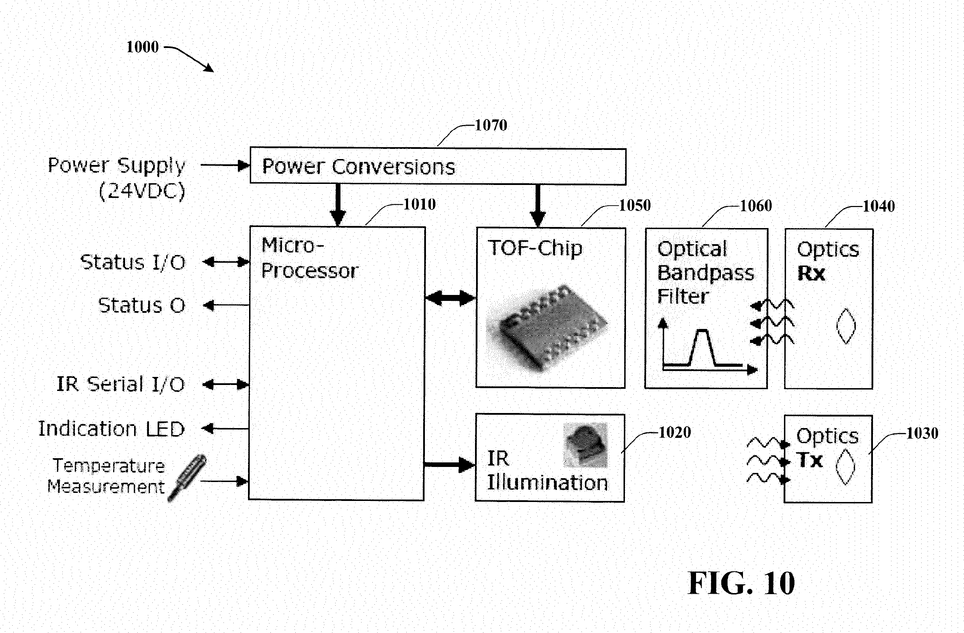

Proceeding to **Fig. 10****,** an example circuit 1000 is illustrated for computing object distances and speeds. A microprocessor 1010 generates infrared (IR) illumination at 1020 that is transmitted toward an object via transmitting optics 1030. Reflections from the object are collected via receiving optics 1040 that can in turn be processed via an optical bandpass filter 1060. A time of flight (TOF) chip 1050 can be employed to compute phase shifts and store distance or other data such as color or image data. Output from the TOF chip 1050 can be passed to the microprocessor 1010 for further processing. In the present application, the microprocessor can employ a user's body movements to control industrial equipment in the performance of various industrial activities based on the detected movement supplied by the TOF chip 1060. As shown, a power supply 1070 can be provided to generate different operating voltages for the microprocessor 1010 and the TOF chip 1050, respectively.

It is noted that as used herein, that various forms of Time of Flight (TOF) sensors can be employed to control industrial equipment in the performance of various industrial activities based on the detected body movement as described herein. These include a variety of methods that measure the time that it takes for an object, particle or acoustic, electromagnetic or other wave to travel a distance through a medium. This measurement can be used for a time standard (such as an atomic fountain), as a way to measure velocity or path length through a given medium, or as a manner in which to learn about the particle or medium (such as composition or flow rate). The traveling object may be detected directly (e.g., ion detector in mass spectrometry) or indirectly (e.g., light scattered from an object in laser Doppler velocimetry).

In time-of-flight mass spectrometry, ions are accelerated by an electrical field to the same kinetic energy with the velocity of the ion depending on the mass-to-charge ratio. Thus the time-of-flight is used to measure velocity, from which the mass-to-charge ratio can be determined. The time-of-flight of electrons is used to measure their kinetic energy. In near infrared spectroscopy, the TOF method is used to measure the media-dependent optical path length over a range of optical wavelengths, from which composition and properties of the media can be analyzed. In ultrasonic flow meter measurement, TOF is used to measure speed of signal propagation upstream and downstream of flow of a media, in order to estimate total flow velocity. This measurement is made in a collinear direction with the flow.

In planar Doppler velocimetry (optical flow meter measurement), TOF measurements are made perpendicular to the flow by timing when individual particles cross two or more locations along the flow (collinear measurements would require generally high flow velocities and extremely narrow-band optical filters). In optical interferometry, the path length difference between sample and reference arms can be measured by TOF methods, such as frequency modulation followed by phase shift measurement or cross correlation of signals. Such methods are used in laser radar and laser tracker systems for medium-long range distance measurement. In kinematics, TOF is the duration in which a projectile is traveling through the air. Given the initial velocity u of a particle launched from the ground, the downward (i.e., gravitational) acceleration and the projectile's angle of projection.

An ultrasonic flow meter measures the velocity of a liquid or gas through a pipe using acoustic sensors. This has some advantages over other measurement techniques. The results are slightly affected by temperature, density or conductivity. Maintenance is inexpensive because there are no moving parts. Ultrasonic flow meters come in three different types: transmission (contrapropagating transit time) flow meters, reflection (Doppler) flowmeters, and open-channel flow meters. Transit time flow meters work by measuring the time difference between an ultrasonic pulse sent in the flow direction and an ultrasound pulse sent opposite the flow direction. Doppler flow meters measure the Doppler shift resulting in reflecting an ultrasonic beam off either small particles in the fluid, air bubbles in the fluid, or the flowing fluid's turbulence. Open channel flow meters measure upstream levels in front of flumes or weirs.

Optical time-of-flight sensors consist of two light beams projected into the medium (e.g., fluid or air) whose detection is either interrupted or instigated by the passage of small particles (which are assumed to be following the flow). This is not dissimilar from the optical beams used as safety devices in motorized garage doors or as triggers in alarm systems. The speed of the particles is calculated by knowing the spacing between the two beams. If there is only one detector, then the time difference can be measured via autocorrelation. If there are two detectors, one for each beam, then direction can also be known. Since the location of the beams is relatively easy to determine, the precision of the measurement depends primarily on how small the setup can be made. If the beams are too far apart, the flow could change substantially between them, thus the measurement becomes an average over that space. Moreover, multiple particles could reside between them at any given time, and this would corrupt the signal since the particles are indistinguishable. For such a sensor to provide valid data, it must be small relative to the scale of the flow and the seeding density.

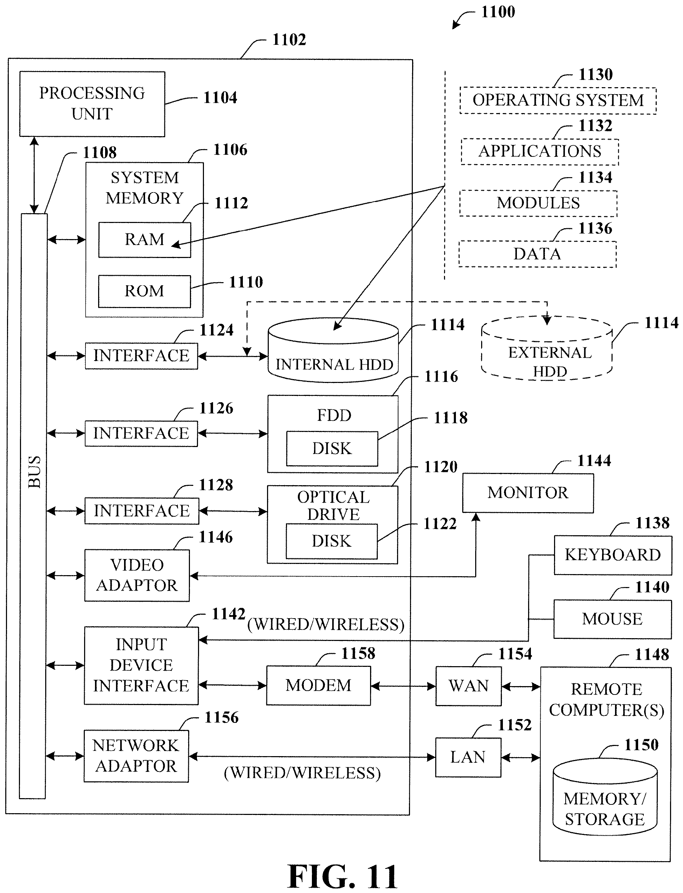

Referring now to **Fig. 11****,** there is illustrated a block diagram of a computer operable to execute the disclosed system. In order to provide additional context for various aspects thereof, **Fig. 11** and the following discussion are intended to provide a brief, general description of a suitable computing environment 1100 in which the various aspects of the claimed subject matter can be implemented. While the description above is in the general context of computer-executable instructions that may run on one or more computers, those skilled in the art will recognize that the subject matter as claimed also can be implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, handheld computing devices, microprocessor-based or programmable consumer electronics, and the like, each of which can be operatively coupled to one or more associated devices.

The illustrated aspects of the claimed subject matter may also be practiced in distributed computing environments where certain tasks are performed by remote processing devices that are linked through a communications network. In a distributed computing environment, program modules can be located in both local and remote memory storage devices.

A computer typically includes a variety of computer readable media. Computer readable media can be any available media that can be accessed by the computer and includes both volatile and non-volatile media, removable and non-removable media. By way of example, and not limitation, computer-readable media can comprise computer storage media and communication media. Computer storage media includes both volatile and non-volatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

With reference again to **Fig. 11****,** the illustrative environment 1100 for implementing various aspects includes a computer 1102, the computer 1102 including a processing unit 1104, a system memory 1106 and a system bus 1108. The system bus 1108 couples system components including, but not limited to, the system memory 1106 to the processing unit 1104. The processing unit 1104 can be any of various commercially available processors. Dual microprocessors and other multi-processor architectures may also be employed as the processing unit 1104.

The system bus 1108 can be any of several types of bus structure that may further interconnect to a memory bus (with or without a memory controller), a peripheral bus, and a local bus using any of a variety of commercially available bus architectures. The system memory 1106 includes read-only memory (ROM) 1110 and random access memory (RAM) 1112. A basic input/output system (BIOS) is stored in a non-volatile memory 1110 such as ROM, EPROM, EEPROM, which BIOS contains the basic routines that help to transfer information between elements within the computer 1102, such as during start-up. The RAM 1112 can also include a high-speed RAM such as static RAM for caching data.

The computer 1102 further includes an internal hard disk drive (HDD) 1114 (e.g., EIDE, SATA), which internal hard disk drive 1114 may also be configured for external use in a suitable chassis (not shown), a magnetic floppy disk drive (FDD) 1116, (e.g., to read from or write to a removable diskette 1118) and an optical disk drive 1120, (e.g., reading a CD-ROM disk 1122 or, to read from or write to other high capacity optical media such as the DVD). The hard disk drive 1114, magnetic disk drive 1116 and optical disk drive 1120 can be connected to the system bus 1108 by a hard disk drive interface 1124, a magnetic disk drive interface 1126 and an optical drive interface 1128, respectively. The interface 1124 for external drive implementations includes at least one or both of Universal Serial Bus (USB) and IEEE 1094 interface technologies. Other external drive connection technologies are within contemplation of the claimed subject matter.

The drives and their associated computer-readable media provide nonvolatile storage of data, data structures, computer-executable instructions, and so forth. For the computer 1102, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the illustrative operating environment, and further, that any such media may contain computer-executable instructions for performing the methods of the disclosed and claimed subject matter.

A number of program modules can be stored in the drives and RAM 1112, including an operating system 1130, one or more application programs 1132, other program modules 1134 and program data 1136. All or portions of the operating system, applications, modules, and/or data can also be cached in the RAM 1112. It is to be appreciated that the claimed subject matter can be implemented with various commercially available operating systems or combinations of operating systems.

A user can enter commands and information into the computer 1102 through one or more wired/wireless input devices, e.g., a keyboard 1138 and a pointing device, such as a mouse 1140. Other input devices (not shown) may include a microphone, an IR remote control, a joystick, a game pad, a stylus pen, touch screen, or the like. These and other input devices are often connected to the processing unit 1104 through an input device interface 1142 that is coupled to the system bus 1108, but can be connected by other interfaces, such as a parallel port, an IEEE 1094 serial port, a game port, a USB port, an IR interface, etc.

A monitor 1144 or other type of display device is also connected to the system bus 1108 via an interface, such as a video adapter 1146. In addition to the monitor 1144, a computer typically includes other peripheral output devices (not shown), such as speakers, printers, etc.

The computer 1102 may operate in a networked environment using logical connections via wired and/or wireless communications to one or more remote computers, such as a remote computer(s) 1148. The remote computer(s) 1148 can be a workstation, a server computer, a router, a personal computer, portable computer, microprocessor-based entertainment appliance, a peer device or other common network node, and typically includes many or all of the elements described relative to the computer 1102, although, for purposes of brevity, only a memory/storage device 1150 is illustrated. The logical connections depicted include wired/wireless connectivity to a local area network (LAN) 1152 and/or larger networks, e.g., a wide area network (WAN) 1154. Such LAN and WAN networking environments are commonplace in offices and companies, and facilitate enterprise-wide computer networks, such as intranets, all of which may connect to a global communications network, e.g., the Internet.

When used in a LAN networking environment, the computer 1102 is connected to the local network 1152 through a wired and/or wireless communication network interface or adapter 1156. The adaptor 1156 may facilitate wired or wireless communication to the LAN 1152, which may also include a wireless access point disposed thereon for communicating with the wireless adaptor 1156.

When used in a WAN networking environment, the computer 1102 can include a modem 1158, or is connected to a communications server on the WAN 1154, or has other means for establishing communications over the WAN 1154, such as by way of the Internet. The modem 1158, which can be internal or external and a wired or wireless device, is connected to the system bus 1108 via the serial port interface 1142. In a networked environment, program modules depicted relative to the computer 1102, or portions thereof, can be stored in the remote memory/storage device 1150. It will be appreciated that the network connections shown are illustrative and other means of establishing a communications link between the computers can be used.

The computer 1102 is operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, restroom), and telephone. This includes at least Wi-Fi and Bluetooth^{™} wireless technologies. Thus, the communication can be a predefined structure as with a conventional network or simply an ad hoc communication between at least two devices.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, e.g., computers, to send and receive data indoors and out; anywhere within the range of a base station. Wi-Fi networks use radio technologies called IEEE 802.11x (a, b, g, etc.) to provide secure, reliable, fast wireless connectivity. A Wi-Fi network can be used to connect computers to each other, to the Internet, and to wired networks (which use IEEE 802.3 or Ethernet).

Wi-Fi networks can operate in the unlicensed 2.4 and 5 GHz radio bands. IEEE 802.11 applies to generally to wireless LANs and provides 1 or 2 Mbps transmission in the 2.4 GHz band using either frequency hopping spread spectrum (FHSS) or direct sequence spread spectrum (DSSS). IEEE 802.11a is an extension to IEEE 802.11 that applies to wireless LANs and provides up to 54 Mbps in the 5GHz band. IEEE 802.11a uses an orthogonal frequency division multiplexing (OFDM) encoding scheme rather than FHSS or DSSS. IEEE 802.1 1b (also referred to as 802.1 1 High Rate DSSS or Wi-Fi) is an extension to 802.11 that applies to wireless LANs and provides 11 Mbps transmission (with a fallback to 5.5, 2 and 1 Mbps) in the 2.4 GHz band. IEEE 802.11g applies to wireless LANs and provides 20+ Mbps in the 2.4 GHz band. Products can contain more than one band (e.g., dual band), so the networks can provide real-world performance similar to the basic 10BaseT wired Ethernet networks used in many offices.

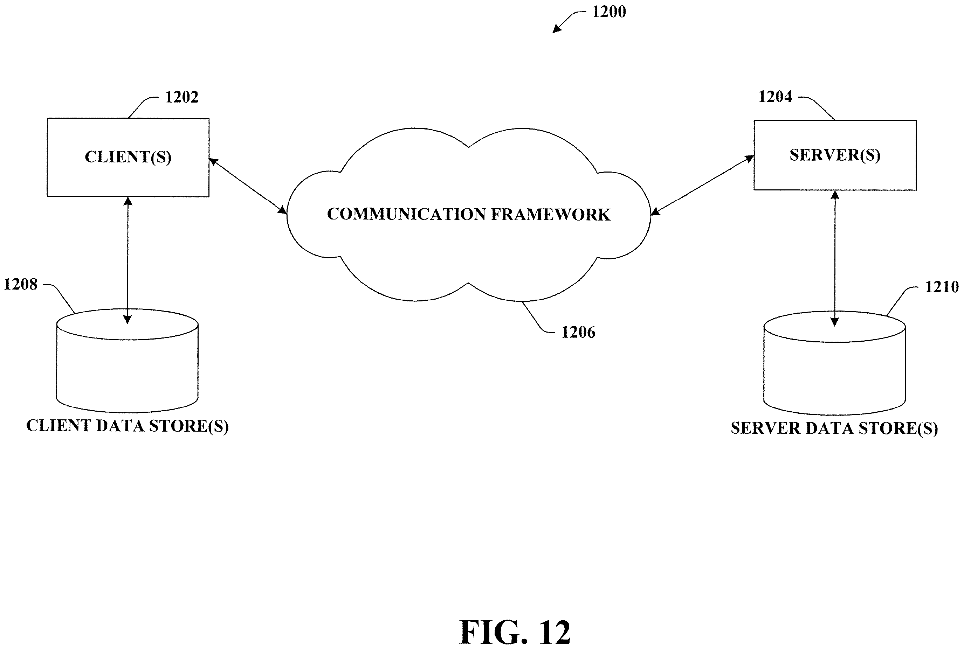

Referring now to **Fig. 12****,** there is illustrated a schematic block diagram of an illustrative computing environment 1200 for processing the disclosed architecture in accordance with another aspect. The system 1200 includes one or more client(s) 1202. The client(s) 1202 can be hardware and/or software (e.g., threads, processes, computing devices). The client(s) 1202 can house cookie(s) and/or associated contextual information by employing the claimed subject matter, for example.

The system 1200 also includes one or more server(s) 1204. The server(s) 1204 can also be hardware and/or software (e.g., threads, processes, computing devices). The servers 1204 can house threads to perform transformations by employing the claimed subject matter, for example. One possible communication between a client 1202 and a server 1204 can be in the form of a data packet adapted to be transmitted between two or more computer processes. The data packet may include a cookie and/or associated contextual information, for example. The system 1200 includes a communication framework 1206 (e.g., a global communication network such as the Internet) that can be employed to facilitate communications between the client(s) 1202 and the server(s) 1204.

Communications can be facilitated via a wired (including optical fiber) and/or wireless technology. The client(s) 1202 are operatively connected to one or more client data store(s) 1208 that can be employed to store information local to the client(s) 1202 (e.g., cookie(s) and/or associated contextual information). Similarly, the server(s) 1204 are operatively connected to one or more server data store(s) 1210 that can be employed to store information local to the servers 1204.

It is noted that as used in this application, terms such as "component," "module," "system," and the like are intended to refer to a computer-related, electro-mechanical entity or both, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process or thread of execution and a component may be localized on one computer or distributed between two or more computers, industrial controllers, or modules communicating therewith.

## Claims

1. A method for utilizing a user's body movement in an industrial automation environment, comprising:
generating, by a human machine interface component (202), a touch screen display projected onto a projection surface; and
enabling a user to interact with the projected touch screen display without touching the projection surface to actuate industrial machinery (108) by:
employing a time-of-flight sensor (102) to detect movement of a body part of the user;
ascertaining whether the movement of the body part conforms to a recognized movement of the body part;
interpreting the recognized movement of the body part as a performable action; and
actuating the industrial machinery (108) to perform the performable action,
wherein the ascertaining whether the movement of the body part conforms to a recognized movement of the body part includes consulting a library of pre-established body part movements to differentiate recognized body part movements from invalid body part movements, and
the interpreting the recognized movement of the body part as a performable action comprises translating the recognized movement of the body part into a command or a set of commands for actuating the industrial machinery (108).

2. The method of claim 1, wherein the employing of the time-of-flight sensor (102) further comprises detecting movement of the body part in three dimensions.

3. The method according to one of claims 1 or 2, wherein the employing of the time-of-flight sensor (102) further comprises detecting movement of fingers, hands, arms, or torso of the user.

4. The method according to one of claims 1 to 3, wherein the employing of the time-of-flight sensor (102) comprises detecting a velocity of movement of the body part of the user.

5. The method according to one of claims 1 to 4, further comprising utilizing the time of flight sensor (102) to correlate the movement of the body part to an industrial automation command used by the industrial machinery (108) to perform the performable action, and persisting a correspondence of the movement of the body part to the industrial automation command to memory.

6. The method of claim 5, wherein the correspondence of the movement of the body part to the industrial automation command is applicable to actuate all industrial machinery included in the industrial automation environment or at least a specific industrial machine included in the industrial automation environment.

7. The method according to one of claims 1 to 6, wherein the command or set of commands includes commands to the industrial machinery (108) to stop, go, or be on standby, and/or wherein the command or set of commands includes commands to the industrial machinery to move right, left, up, down, forwards, or backwards.

8. The method according to one of claims 1 to 7, wherein the movement of the body part conveys a command modifier to increase or decrease a magnitude associated with a previously interpreted action or an action to be interpreted.

9. The method according to one of claims 1 to 8, wherein the employing of the time-of-flight sensor (102) further comprises utilizing a logic component (106), and a memory that persists patterns of movement.

10. The method according to claim 9, wherein the utilizing of the time-of-flight sensor (102) in conjunction with the logic component (106) and the memory, further comprises employing fuzzy logic to ascertain whether the movement of the body part conforms to a persisted pattern of movement.

11. The method according to one of claims 1 to 9, wherein the employing of the time-of-flight sensor (102) to detect movement of the body part of the user further comprises recognizing an accidental or inadvertent intrusion of the body part within a bounded area monitored by the time-of-flight sensor (102).

12. The method according to claim 11, wherein the bounded area monitored by the time-of-flight sensor (102) is demarcated by the user using a body part to trace a periphery of the bounded area, wherein the periphery traced and associated with the bounded area is persisted to a memory.

13. A system (200) that employs body movement to control industrial machinery (108) in an industrial automation environment, comprising:
a human machine interface component (202) configured to generate a touch screen display projected onto a projection surface with which the user interacts without touching the projection surface;
time-of-flight sensor (102) configured to detect movement of a body part of a user positioned proximate to the time-of-flight sensor;
an industrial controller (104) configured to establish whether the movement of the body part conforms with a recognized movement of the body part; and
an industrial machine (108) configured to perform an action based at least in part on instructions received from the industrial controller (104),
wherein the system (200) is adapted to perform a method according to one of claims 1 to 12.

14. The system (200) of claim 13, wherein the time-of-flight sensor (102) is configured to detect a velocity of the movement of the body part, and/or
wherein the velocity indicates: a speed with which a control surface associated with the industrial machine (108) is manipulated, a force with which the control surface is manipulated, or a pressure exerted on the control surface, and/or
wherein the control surface associated with the industrial machine (108) includes: buttons, wheels, levers, or scroll bars.

## Patentansprüche

1. Verfahren zum Nutzen von Körperbewegung eines Benutzers in einer Industrieautomations-Umgebung, das umfasst:
Erzeugen einer auf eine Projektionsfläche projizierten Touchscreen-Anzeige durch eine Mensch-Maschine-Schnittstellenkomponente (202); und
Zulassen, dass ein Benutzer mit der projizierten Touchscreen-Anzeige in Interaktion tritt, ohne die Projektionsfläche zu berühren, um Industriemaschinerie (108) mittels folgender Schritte zu betätigen:
Einsetzen eines Laufzeitsensors (102) zum Erfassen von Bewegung eines Körperteils des Benutzers;
Feststellen, ob die Bewegung des Körperteils mit einer erkannten Bewegung des Körperteils übereinstimmt;
Interpretieren der erkannten Bewegung des Körperteils als eine durchführbare Aktion; und
Betätigen der Industriemaschinerie (108) zum Durchführen der durchführbaren Aktion,
wobei das Feststellen, ob die Bewegung des Körperteils mit einer erkannten Bewegung des Körperteils übereinstimmt, Konsultieren einer Bibliothek im Voraus festgelegter Körperteil-Bewegungen zum Unterscheiden erkannter Körperteil-Bewegungen von ungültigen Körperteil-Bewegungen einschließt, und
das Interpretieren der erkannten Bewegung des Körperteils als eine durchführbare Aktion Übersetzen der erkannten Bewegung des Körperteils in einen Befehl oder einen Satz von Befehlen zum Betätigen der Industriemaschinerie (108) umfasst.

2. Verfahren nach Anspruch 1, wobei das Einsetzen des Laufzeitsensors (102) des Weiteren Erfassen von Bewegung des Körperteils in drei Dimensionen umfasst.

3. Verfahren nach einem der Ansprüche 1 oder 2, wobei das Einsetzen des Laufzeitsensors (102) des Weiteren Erfassen von Bewegung von Fingern, Händen, Armen oder Rumpf des Benutzers umfasst.

4. Verfahren nach einem der Ansprüche 1 bis 3, wobei das Einsetzen des Laufzeitsensors (102) Erfassen einer Geschwindigkeit von Bewegung des Körperteils des Benutzers umfasst.

5. Verfahren nach einem der Ansprüche 1 bis 4, des Weiteren umfassend Nutzen des Laufzeitsensors (102) zum Korrelieren der Bewegung des Körperteils mit einem Industrieautomations-Befehl, der von der Industriemaschinerie (108) verwendet wird, um die durchführbare Aktion durchzuführen, sowie Speichern einer Entsprechung der Bewegung des Körperteils zu dem Industrieautomations-Befehl.

6. Verfahren nach Anspruch 5, wobei die Entsprechung der Bewegung des Körperteils zu dem Industrieautomations-Befehl angewendet werden kann, um die gesamte Industriemaschinerie, die in der Industrieautomations-Umgebung enthalten ist, oder wenigstens eine bestimmte Industriemaschine zu betätigen, die in der Industrieautomations-Umgebung enthalten ist.

7. Verfahren nach einem der Ansprüche 1 bis 6, wobei der Befehl oder der Satz von Befehlen Befehle an die Industriemaschinerie (108) dahingehend einschließt, anzuhalten, zu laufen oder im Bereitschaftszustand zu sein, und/oder wobei der Befehl oder der Satz von Befehlen Befehle an die Industriemaschinerie dahingehend einschließt, sich nach rechts, links, oben, unten, vorwärts oder rückwärts zu bewegen.

8. Verfahren nach einem der Ansprüche 1 bis 7, wobei die Bewegung des Körperteils einen Befehls-Modifizierfaktor zum Vergrößern oder Verkleinern eines Betrages übermittelt, der mit einer bereits interpretierten Aktion oder einer zu interpretierenden Aktion zusammenhängt.

9. Verfahren nach einem der Ansprüche 1 bis 8, wobei das Einsetzen des Laufzeitsensors (102) des Weiteren Nutzen einer Logik-Komponente (106) sowie eines Speichers umfasst, der Bewegungsmuster speichert.

10. Verfahren nach Anspruch 9, wobei das Nutzen des Laufzeitsensors (102) in Verbindung mit der Logik-Komponente (106) und dem Speicher des Weiteren Einsetzen von Fuzzy-Logik umfasst, um festzustellen, ob die Bewegung des Körperteils mit einem gespeicherten Bewegungsmuster übereinstimmt.

11. Verfahren nach einem der Ansprüche 1 bis 9, wobei Einsetzen des Laufzeitsensors (102) zum Erfassen von Bewegung des Körperteils des Benutzers des Weiteren Erkennen eines zufälligen oder unbeabsichtigten Eindringens des Körperteils in einen von dem Laufzeitsensor (102) überwachten begrenzten Bereich umfasst.

12. Verfahren nach Anspruch 11, wobei der von dem Laufzeitsensor (102) überwachte begrenzte Bereich von dem Benutzer unter Verwendung eines Körperteils zum Verfolgen eines Umfangs des begrenzten Bereiches abgegrenzt wird, und der verfolgte und mit dem begrenzten Bereich zusammenhängende Umfang in einem Speicher gespeichert wird.

13. System (200), das Körperbewegung einsetzt, um Industriemaschinerie (108) in einer Industrieautomations-Umgebung zu steuern, umfassend:
eine Mensch-Maschine-Schnittstellenkomponente (202), die so konfiguriert ist, dass sie eine auf eine Projektionsfläche projizierte Touchscreen-Anzeige erzeugt, mit der der Benutzer in Interaktion tritt, ohne die Projektionsfläche zu berühren;
einen Laufzeitsensor (102), der so konfiguriert ist, dass er Bewegung eines Körperteils eines Benutzers erfasst, der nahe an dem Laufzeitsensor positioniert ist;
einen Industrie-Controller (104), der so konfiguriert ist, dass er feststellt, ob die Bewegung des Körperteils mit einer erkannten Bewegung des Körperteils übereinstimmt; und
eine Industriemaschine (108), die so konfiguriert ist, dass sie eine Aktion durchführt, die wenigstens teilweise auf von dem Industrie-Controller (104) empfangenen Befehlen basiert,
wobei das System (200) zum Durchführen eines Verfahrens nach einem der Ansprüche 1 bis 12 eingerichtet ist.

14. System (200) nach Anspruch 13, wobei der Laufzeitsensor (102) so konfiguriert ist, dass er eine Geschwindigkeit der Bewegung des Körperteils erfasst, und/oder
wobei die Geschwindigkeit eine Geschwindigkeit, mit der eine Bedienoberfläche betätigt wird, die mit der Industriemaschine (108) verbunden ist, eine Kraft, mit der die Bedienoberfläche betätigt wird, oder einen Druck angibt, der auf die Bedienoberfläche ausgeübt wird, und/oder
wobei die mit der Industriemaschine (108) verbundene Bedienoberfläche Tasten, Räder, Hebel oder Bildlaufleisten einschließt.

## Revendications

1. Procédé pour utiliser le mouvement du corps d'un utilisateur dans un environnement d'automatisation industrielle, comprenant :
générer, par un composant d'interface homme-machine (202), un affichage à écran tactile projeté sur une surface de projection ; et
permettre à un utilisateur d'interagir avec l'affichage à écran tactile projeté sans toucher la surface de projection pour actionner une machinerie industrielle (108) en :
utilisant un capteur de temps de vol (102) pour détecter le mouvement d'une partie de corps de l'utilisateur ;
vérifiant si le mouvement de la partie de corps est conforme à un mouvement reconnu de la partie de corps ;
interprétant le mouvement reconnu de la partie de corps comme une action exécutable ;et
actionnant la machinerie industrielle (108) pour exécuter l'action exécutable,
dans lequel la vérification de la conformité du mouvement de la partie de corps à un mouvement reconnu de la partie de corps comprend la consultation d'une bibliothèque de mouvements de partie de corps préétablis pour différencier les mouvements de partie de corps reconnus des mouvements de partie de corps invalides, et
l'interprétation du mouvement reconnu de la partie de corps comme une action exécutable comprend la traduction du mouvement reconnu de la partie de corps en un ordre ou un ensemble d'ordres pour actionner la machinerie industrielle (108).

2. Procédé de la revendication 1, dans lequel l'utilisation du capteur de temps de vol (102) comprend en outre la détection du mouvement de la partie de corps en trois dimensions.

3. Procédé selon l'une des revendications 1 ou 2, dans lequel l'utilisation du capteur de temps de vol (102) comprend en outre la détection du mouvement des doigts, des mains, des bras ou du torse de l'utilisateur.

4. Procédé selon l'une des revendications 1 à 3, dans lequel l'utilisation du capteur de temps de vol (102) comprend la détection d'une vitesse de mouvement de la partie de corps de l'utilisateur.

5. Procédé selon l'une des revendications 1 à 4, comprenant en outre l'utilisation du capteur de temps de vol (102) pour corréler le mouvement de la partie de corps à un ordre d'automatisation industrielle utilisé par la machinerie industrielle (108) pour exécuter l'action exécutable, et la conservation dans une mémoire d'une correspondance du mouvement de la partie de corps à l'ordre d'automatisation industrielle.

6. Procédé de la revendication 5, dans lequel la correspondance du mouvement de la partie de corps à l'ordre d'automatisation industrielle est applicable pour actionner toutes les machineries industrielles incluses dans l'environnement d'automatisation industrielle ou au moins une machine industrielle spécifique incluse dans l'environnement d'automatisation industrielle.

7. Procédé selon l'une des revendications 1 à 6, dans lequel l'ordre ou l'ensemble d'ordres comprend des ordres amenant la machinerie industrielle (108)à s'arrêter, se mettre en marche ou se mettre en veille, et/ou dans lequel l'ordre ou l'ensemble d'ordres comprend des ordres amenant la machinerie industrielle à se déplacer vers la droite, la gauche, le haut, le bas, l'avant ou l'arrière.

8. Procédé selon l'une des revendications 1 à 7, dans lequel le mouvement de la partie de corps transmet un modificateur d'ordre pour augmenter ou diminuer une grandeur associée à une action précédemment interprétée ou une action à interpréter.

9. Procédé selon l'une des revendications 1 à 8, dans lequel l'utilisation du capteur de temps de vol (102) comprend en outre l'utilisation d'un composant logique (106) et d'une mémoire qui conserve les modèles de mouvement.

10. Procédé selon la revendication 9, dans lequel l'utilisation du capteur de temps de vol (102) conjointement avec le composant logique (106) et la mémoire comprend en outre l'utilisation d'une logique floue pour vérifier si le mouvement de la partie de corps est conforme à un modèle de mouvement conservé.

11. Procédé selon l'une des revendications 1 à 9, dans lequel l'utilisation du capteur de temps de vol (102) pour détecter le mouvement de la partie de corps de l'utilisateur comprend en outre la reconnaissance d'une intrusion accidentelle ou involontaire de la partie de corps dans une zone limitée surveillée par le capteur de temps de vol (102).

12. Procédé selon la revendication 11, dans lequel la zone limitée surveillée par le capteur de temps de vol (102) est délimitée par l'utilisateur en utilisant une partie de corps pour tracer une périphérie de la zone limitée, où la périphérie tracée et associée à la zone limitée est conservée dans une mémoire.

13. Système (200) qui utilise le mouvement du corps pour commander une machinerie industrielle (108) dans un environnement d'automatisation industrielle, comprenant :
un composant d'interface homme-machine (202) configuré pour générer un affichage à écran tactile projeté sur une surface de projection avec laquelle l'utilisateur interagit sans toucher la surface de projection ;
un capteur de temps de vol (102) configuré pour détecter le mouvement d'une partie de corps d'un utilisateur positionné à proximité du capteur de temps de vol ;
un dispositif de commande industriel (104) configuré pour établir si le mouvement de la partie de corps est conforme à un mouvement reconnu de la partie de corps ; et
une machine industrielle (108) configurée pour exécuter une action sur la base au moins en partie d'instructions reçues du dispositif de commande industriel (104),
dans lequel le système (200) est adapté pour exécuter un procédé selon l'une des revendications 1 à 12.

14. Système (200) de la revendication 13, dans lequel le capteur de temps de vol (102) est configuré pour détecter une vitesse du mouvement de la partie de corps, et/ou
dans lequel la vitesse indique : une vitesse avec laquelle une gouverne associée à la machine industrielle (108) est manipulée, une force avec laquelle la gouverne est manipulée, ou une pression exercée sur la gouverne, et/ou
dans lequel la gouverne associée à la machine industrielle (108) comprend : des boutons, des molettes, des leviers ou des barres de défilement.
